# EUROPÄISCHE PATENTSCHRIFT

(11) **EP 2 640 756 B1**
(45) Veröffentlichungstag und Bekanntmachung des Hinweises auf die Patenterteilung: **08.03.2017**
(21) Anmeldenummer: 11774011.8
(22) Anmeldetag: 12.10.2011
(51) Int. Cl.: C08F 2/60, C08F 8/00

(54) **MATERIALIEN MIT STEUERBAREM VERNETZUNGSGRAD**
MATERIALS HAVING CONTROLABLE DEGREE OF CROSSLINKING
MATÉRIAUX AYANT UN DEGRÉ DE RÉTICULATION CONTROLABLE

(30) Priorität: 17.11.2010 DE 102010044025
(43) Veröffentlichungstag der Anmeldung: 25.09.2013
(73) Patentinhaber: Evonik Röhm GmbH, 64293 Darmstadt (DE)
(72) Erfinder: HILF, Stefan, 63517 Rodenbach (DE); SCHMIDT, Friedrich, Georg, 45721 Haltern am See (DE); BARNER-KOWOLLIK, Christopher, 76297 Stutensee (DE); ZHOU, Jiawen, 47443 Moers (DE)
(86) Internationale Anmeldenummer: PCT/EP2011/067752
(87) Internationale Veröffentlichungsnummer: WO 2012/065786

(56) Entgegenhaltungen:
- EP-A1- 1 762 593
- US-A- 4 316 978
- US-A1- 2007 148 465

## Beschreibung

Die vorliegende Erfindung betrifft neuartige Materialien, die mittels zwei unterschiedlicher Vernetzungsmechanismen vernetzt werden können, wobei es sich bei dem ersten Vernetzungsmechanismus um eine irreversible Vernetzung handelt. Bei dem zweiten Vernetzungsmechanismus handelt es sich um einen thermoreversiblen Mechanismus.

Durch diese thermoreversible Veränderung der Netzbogenlänge können Eigenschaften des vernetzen Materials entscheidend verändert und gesteuert werden, dies beinhaltet u.a. Flexibilität, Elastizität und weitere mechanische Eigenschaften, aber auch chemische Eigenschaften, die Gas- und Dampfpermeabilität und Speichervermögen des Netzwerks. Auf diese Weise könnten z.B. Energieträger wie Brennstoffe gespeichert werden.

### Stand der Technik

Methoden zur reversiblen Vernetzung von Polymeren sind für ein breites Feld von Anwendungen von großem Interesse.

Beispielsweise in Klebanwendungen sind diverse Möglichkeiten für die Automobilindustrie oder die Halbleiterindustrie beschrieben. Aber auch bei der Konstruktion von Maschinen, feinmechanischen Geräten oder in der Bauinduistrie sind solche Klebstoffe interessant. Neben Klebanwendungen können reversibel vernetzbare Polymere auch in Dichtstoffen, Beschichtungsmassen wie Lacken oder Farben oder bei der Herstellung von Formkörpern interessant sein.

Bis dato ist jedoch kein technisch verwendbares System beschrieben, bei dem ein permanent vernetztes System bezüglich der Eigenschaften - z.B. zwischen einem elastomeren und einem duroplastischen Zustand - schaltbar ist.

In DE 198 32 629 und in DE 199 61 940 sind Verfahren beschrieben, bei denen Klebstoffe auf Epoxy-, Harnstoff-, (Meth)acrylat- oder Isocyanatbasis thermisch zersetzt werden. Die Klebstoffformulierung aus DE 199 61 940 enthält dazu eine thermisch instabile Substanz, die bei Erhitzen aktiviert wird. Die Klebschicht in DE 198 32 629 wird durch besonders hohen Energieeintrag zerstört. Die Desaktivierung der Klebschicht ist in beiden Fällen irreversibel.

In US 2005/0159521 bzw. in US 2009/0090461 ist ein Klebsystem beschrieben, das durch Bestrahlung mit aktinischer Strahlung radikalisch vernetzt und durch Ultraschall zerstört wird. Auch dieses Verfahren ist nach einem Klebezyklus irreversibel nicht mehr durchführbar.

In EP 2 062 926 sind in die Ketten eines Polyurethans für Klebanwendungen thermisch labile, sterisch gehinderte Harnstoffgruppen eingebaut, die durch Eintrag thermischer Energie zerstört wird und damit die Klebwirkung ausreichend zur Lösung der Verbindung reduziert wird.

In US 2009/0280330 ist ein wahrscheinlich mehrfach verwendbares Klebsystem beschrieben, das einen Zweischichtaufbau aufweist. Bei einer Schicht handelt es sich um eine Shape-Memory-Schicht, die thermisch flexibel oder gehärtet werden kann. Bei der anderen Schicht handelt es sich um einen Trockenkleber, der unterschiedliche Klebstärken in Abhängigkeit von der Struktur aufweist. Problem eines solchen Systems ist jedoch die aufwendig aufzubauende zweischichtige Struktur und die zu erwartende Restklebrigkeit nach Erhitzen der Shape-Memory-Schicht. Unter dem Oberbegriff "Click Chemie" werden seit einigen Jahren vor allem in der akademischen Welt Methoden zum Aufbau von Blockcopolymeren erforscht. Dabei werden zwei unterschiedliche Homopolymere mit verknüpfbaren Endgruppen miteinander kombiniert und z.B. mittels einer Diels-Alder-Reaktion, Diels-Alder-analogen Reaktion bzw. einer anderen Cycloaddition miteinander verbunden. Ziel dieser Reaktion ist es, thermisch stabile, lineare und ggf. hochmolekulare Polymerketten aufzubauen. In Inglis et al. (Macromolecules 2010, 43, S.33-36) beispielsweise sind zu diesem Zweck Polymere mit Cyclopentadienylendgruppen, die aus mittels ATRP hergestellten Polymeren erhältlich sind, beschrieben. Diese Cyclopentadiengruppen können sehr rasch in hetero Diels-Alder Reaktionen mit Polymeren reagieren, welche elektronenarme Dithioester als Endgruppen tragen (Inglis et al. Angew. Chem. Int. Ed. 2009, 48, S. 2411-2414).

Die Verwendung von monofunktionellen RAFT-Polymeren zur Verknüpfung mit monofunktionellen Polymeren, die eine Dihydrothiopyran-Gruppe über eine Hetero-Diels-Alder-Reaktion findet sich in Sinnwell et al. (Chem. Comm. 2008, 2052-2054). Mit dieser Methode lassen sich AB-Diblockcopolymere realisieren. Schnelle Varianten dieser Hetero-Diels-Alder-Verknüpfung zur Synthese von AB-Blockcopolymeren mit einer nach einer RAFT-Polymerisation vorliegenden Dithioester-Gruppe und einer Dienyl-Endgruppe sind in Inglis et al. (Angew.Chem.Int.Ed. 2009, 48, S.2411-14) und in Inglis et al. (Macromol. Rapd Commun. 2009, 30, S.1792-98) beschrieben. Die analoge Herstellung von Multiarm-Sternpolymeren findet sich in Sinnwell et al. (J.Pol.Sci.: Part A: Pol.Chem. 2009, 47, S.2207-13).

In US 6,933,361 ist ein System zur Herstellung von einfach reparierbaren, transparenten Formkörpern beschrieben. Das System besteht aus zwei multifunktionellen Monomeren, die mittels einer Diels-Alder-Reaktion zu einem hochdichten Netzwerk polymerisieren. Dabei handelt es sich bei der einen Funktionalität um ein Maleinsäureimid und bei der anderen Funktionalität um ein Furan. Das thermische Schalten eines solchen hochdichten Netzwerks dient zur Reparatur desselbigen. Die Vernetzung findet bei Temperaturen oberhalb von 100 °C statt, die partielle Rückreaktion bei noch höheren Temperaturen.

Bei Syrett et al. (Polym.Chem. 2010, DOI:
10.1039/b9py00316a) werden Sternpolymere zur Verwendung als Fließverbesserer in Ölen beschrieben. Diese weisen mittels einer reversiblen Diels-Alder-Reaktion steuerbare, selbstheilende Eigenschaften auf. Dazu werden monofunktionelle Polymethacrylatarme mit Polymethacrylaten kombiniert, die in der Mitte der Kette, als Fragment des eingesetzten Initiators über eine in einer reversiblen Diels-Alder-Reaktion verwendbare Gruppe verfügen.
In der am 16.02.2010 beim Deutschen Patent- und Markenamt hinterlegten Patentanmeldung mit der Nummer 102010001987.9 sind vernetzbare Systeme offenbart, die einen thermoreversiblen Vernetzungsmechanismus auf Basis einer Diels-Alder- oder einer Hetero-Diels-Alder-Reaktion aufweisen. In der am gleichen Tag hinterlegten deutschen Patentanmeldung 102010001992.5 sind analoge Systeme offenbart, die mittels des gleichen thermoreversiblen Mechanismus eine steuerbare Viskosität aufweisen. Dabei sind beide Patentanmeldungen überwiegend auf Systeme eingeschränkt, bei denen das Dienophil eine Kohlenstoff-Schwefel Doppelbindung aufweist. Zudem sind in beiden Fällen nur Systeme beschrieben, die zumindest eine polymere Komponente enthalten, die auf einer kontrollierten radikalischen Polymerisation beruht.

### Aufgabe

Aufgabe der vorliegenden Erfindung ist die Bereitstellung neuer Werkstoffe, die in Bezug auf mechanische Eigenschaften wie verschiedenen elastomeren und/oder duroplastischen Zuständen schaltbar sind.

Insbesondere besteht die Aufgabe, eine reversible Vernetzungsmethode zur Verfügung zu stellen, die mehrfach, d.h. mindestens fünfmal zwischen den beiden Zuständen ohne großen Eigenschaftsverlust schaltbar ist.

Darüber hinaus besteht die Aufgabe, diese Schaltung bei geringen Temperaturen sehr schnell aktivieren zu können und unter Bedingungen, die unschädlich für die Formulierung und eventuell beschichtete Substrate sind, wieder deaktivieren zu können.

Weitere nicht explizit genannte Aufgaben ergeben sich aus dem Gesamtzusammenhang der nachfolgenden Beschreibung, Ansprüche und Beispiele.

### Lösung

Gelöst wurden die Aufgaben durch die Kombination zweier Vernetzungsmechanismen, bei denen es sich zumindest in einem Fall um einen reversiblen Vernetzungsmechanismus, der unabhängig von den Formulierungsbestandteilen wie Bindemittel für verschiedenartige Polymere einsetzbar ist, handelt. Mit diesem Mechanismus werden auch neue, bezüglich Vernetzungsgrad reversibel schaltbare Formulierungen zur Verfügung gestellt. Überraschend wurde gefunden, dass die gestellten Aufgaben durch eine Formulierung, die mittels Kombination einer Diels-Alder- oder einer Hetero-Diels-Alder-Reaktion und eines zweiten davon unabhängigen Vernetzungsmechanismus schaltbar ist, gelöst werden können.

Insbesondere werden die Aufgaben durch zur Verfügung Stellen einer neuartigen, teilweise reversibel vernetzbaren Formulierung, die dadurch gekennzeichnet ist, dass die Formulierung mittels zweier unterschiedlicher Mechanismen A und B vernetzbar ist, gelöst.

Durch die Diels-Alder- bzw. Hetero-Diels-Alder-Reaktion eines Diens mit einem Dienophil kann z.B. die Vernetzungsdichte des Materials unterhalb der Retro-Diels-Alder-Temperatur gezielt erhöht werden. So kann beispielsweise zwischen einem elastomeren und einem duroplastischen Zustand des Materials geschaltet werden.

Bei Mechanismus A handelt es sich dabei um eine Diels-Alder- oder eine Hetero-Diels-Alder-Reaktion, die bei einer Aktivierungstemperatur T₁, bei der es sich bevorzugt um die Raumtemperatur handelt, aktivierbar ist. Die dabei ausgebildete Vernetzung kann bei einer höheren Temperatur T₃ zu mindestens 50% wieder rückgängig gemacht werden. Mechanismus B erfüllt gleichzeitig erfindungsgemäß diese Kombination von Bedingungen nicht. Das heißt, dass Mechanismus B entweder bei einer Temperatur T₂ die höher liegt als die Aktivierungstemperatur T₁ aktivierbar ist und/oder die Vernetzung kann nicht rückgängig gemacht werden und/oder die Temperatur T₄, bei der die Vernetzung rückgängig gemacht wird, ist höher als die Temperatur T₃, bei der die Vernetzung nach Mechanismus A rückgängig gemacht wird.
Unter Raumtemperatur wird im Rahmen dieser Erfindung eine Temperatur von 20 °C verstanden.

Bei Vernetzungsmechanismus B kann es sich um sämtliche bekannten Vernetzungsmechanismen handeln. Diese sind jeweils system- bzw. anwendungsspezifisch zu wählen. Die dazu geeigneten Mechanismen bzw. benötigten Formulierungen sind dem Fachmann bekannt und können in entsprechenden Lehrbüchern nachgelesen werden.
Man unterscheidet dazu im Rahmen dieser Erfindung drei Arten von Vernetzung: irreversible chemische, reversible chemische und reversible physikalische Vernetzungsmechanismen. Bei den irreversiblen chemischen Vernetzungsmechanismen kann es sich beispielsweise und bevorzugt um einen Kondensations- oder Additions- Mechanismus unter Ausbildung von Vernetzungsstellen, die eine Ester-, Amid- oder Epoxyfunktionalität aufweisen, handeln. Bei feuchtigkeitsvernetzenden Mechanismen handelt es sich um silyl- oder isocyanat-basierte Vernetzungssysteme.
Beispiele hierfür wären die Vernetzung von Di- oder Trimethoxysilylgruppen mit Feuchtigkeit bzw. die vernetzende Reaktion von Polyolen mit Isocyanaten.
Eine weitere Gruppe der irreversiblen chemischen Vernetzungsmechanismen stellen die radikalischen Vernetzungen dar. Diese können mittels Strahlung, wie UV-Strahlung, thermisch oder unter Formulierung mit Initiatoren aktiviert werden. Diese Systeme können zusätzlich optional Beschleuniger enthalten.
Eine dritte Gruppe stellt die Vulkanisation dar. Hierbei werden dafür geeignete Verbindungen, in der Regel Schwefel oder Thiolgruppen aufweisende Verbindungen, an Kohlenstoff-Kohlenstoff-Doppelbindungen addiert. Eine andere mögliche additive Vernetzungsreaktion ist die En-Reaktion, wie sie aus der Vernetzung mit Dicyclopentadiengruppen bekannt ist.

Bei der reversiblen physikalischen Vernetzung sind gleichfalls verschiedene Arten der Vernetzung bekannt. Die wichtigsten Vertreter sind ionische Vernetzungen oder Vernetzungen mittels Kristallisation wie sie bei thermoplastischen Elastomeren, z.B. bei einigen Polyolefinen, bekannt sind.

In einer besonderen Ausführungsform der vorliegenden Erfindung handelt es sich bei dem Vernetzungsmechanismus B gleichfalls um einen reversiblen chemischen Vernetzungsmechanismus wie bei Mechanismus A. Bevorzugt handelt es sich gleichsam um eine reversibel schaltbare Diels-Alder- oder Hetero-Diels-Alder-Reaktion. Wichtig ist, dass in diesem Fall die Vernetzungstemperatur T₂ mindestens 20 °C, bevorzugt mindestens 40 °C oberhalb der Vernetzungstemperatur T₁ des Vernetzungsmechanismus A liegt und/oder die Deaktivierungstemperatur T₄ um mindestens 20 °C, bevorzugt um mindestens 40 °C höher ist als die Deaktivierungstemperatur T₃ des Mechanismus A.

Die erfindungsgemäße Formulierung beinhaltet mindestens eine Komponente A, die mindestens zwei dienophile Doppelbindungen aufweist, und eine Komponente B, die mindestens zwei Dien-Funktionalitäten aufweist. Dabei weist mindestens eine dieser beiden Komponenten A oder B mehr als zwei Funktionalitäten auf. Komponenten A und B sind die für Vernetzungsmechanismus A benötigten Komponenten.

Die zweite, nur optional reversible Vernetzungsreaktion erfolgt mittels der Komponenten C und optional D. Diese Komponenten enthalten die zur Vernetzung mittels des Vernetzungsmechanismus B benötigten Funktionalitäten. Bei Systemen, die nur eine Komponente C enthalten, seien beispielsweise UV- oder auch Siyl-vernetzende Systeme genannt. Bei Systemen, die auch eine Komponente D enthalten, kann es sich beispielsweise bei Komponente C um Polyole und bei Komponente D um Verbindungen, die Isocyanatgruppen aufweisen, handeln. Für reversible Vernetzungsmechanismen A und B könnte es sich entsprechend bei Komponente C um mindestens zwei von A verschiedene Dienophile und bei Komponente D um Verbindungen, die mindestens zwei von B verschiedene Dienfunktionalitäten aufweisen, handeln.

Es sind weitere alternative Zusammensetzungen gedacht. So kann Verbindung C z.B. identisch mit Komponente A oder Komponente B sein. In einem solchen Fall handelt es sich beispielsweise bei Komponente A um eine Verbindung, die gleichzeitig mindestens zwei dienophile Doppelbindungen und die für Vernetzungsreaktion B benötigten Funktionalitäten der Komponente C aufweist. Alternativ kann Komponente C auch im analogen Sinne identisch mit Komponente B sein. Es ist auch möglich, dass Komponente D mit einer der beiden Komponenten analog identisch ist, oder dass die Komponenten A und C und die Komponenten B und D jeweils identische Verbindungen in diesem Sinne sind. Auch der dazu umgekehrte Fall, dass A und D sowie B und C identisch sind, ist denkbar.

Weitere Ausführungsformen ergeben sich dann, wenn das System über zwei reversible Vernetzungsmechanismen A und B verfügt. In diesem Fall kann neben den bereits ausgeführten Beispielen mit den Komponenten A, B, C und D, also mit vier verschiedenen funktionellen Gruppen, auch eine Variante aus drei Komponenten A, B und C mit drei verschiedenen funktionellen Gruppen vorliegen. In diesem Fall reagiert entweder eine Art Dienophil mit zwei unterschiedliche Dienen oder aber zwei unterschiedliche Dienophile liegen neben nur einer Art Dien vor. Wichtig ist dabei, dass die nur einfach vorliegende funktionelle Gruppe in ausreichender Menge vorhanden ist, um eine Reaktion mit beiden Spezies der komplementären Funktionalität zu ermöglichen.

Ein weiterer Aspekt der vorliegenden Erfindung ist, dass mindestens eine der Komponenten A, B, C und D als Polymer vorliegt. Bevorzugt liegt zumindest eine der Komponenten A oder B als Polymer vor. Besonders bevorzugt sind Systeme, in denen mindestens zwei der Komponenten A, B und C als Polymer vorliegen.

Wenn man nur die Komponenten A und B betrachtet, ergeben sich daraus folgende beispielhaft aufgeführten Zusammensetzungen. Für C und optional D können entsprechende frei wählbare Zusammensetzungen aus niedermolekularen Verbindungen, Oligomeren oder Polymeren gelten:
In einer alternativen Ausführungsform handelt es sich bei der Komponente mit mindestens drei Funktionalitäten um ein Oligomer oder um eine niedermolekulare Substanz und bei der Komponente mit zwei Funktionalitäten um ein Polymer. In einer dritten, alternativen Ausführungsform handelt es sich bei beiden Komponenten um Polymere. In weiteren alternativen Ausführungsformen haben beide Komponenten mindestens drei Funktionalitäten, unabhängig davon, welche der beiden Komponenten ein Polymer ist. In einer weiteren Ausführungsform handelt es sich bei beiden Komponenten um Polymere mit mindestens drei Funktionalitäten.

Ganz besonders bevorzugt handelt es sich bei den Komponenten A und B, insbesondere A, B und C, optional sogar bei A, B, C und D jeweils um ein Polymer. Dabei können diese Polymere, abgesehen von den bei der Vernetzung benötigten funktionellen Gruppen, gleiche oder verschiedene Polymere sein.

Bei diesen Polymeren kann es sich um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handeln.
Diese Sternpolymere können über 30 Arme aufweisen. Die Zusammensetzung der Arme kann variieren und sich aus verschienden Polymeren zusammensetzen. Auch können diese Arme wiederum Verzweigungsstellen aufweisen. Die Kammpolymere können eine Blockstruktur aufweisen sowie variable Kammarme.

Die im Weiteren verwendete Schreibweise (Meth)acrylate steht für Alkylester der Acrylsäure und/oder der Methacrylsäure.

Ein besonderer Aspekt der Erfindung ist, dass die Formulierung nach Vernetzungsmechanismus A bei Raumtemperatur vernetzbar ist und diese Vernetzung bei einer höheren Temperatur zu mindestens 50% wieder rückgängig gemacht werden kann. Damit ist die Formulierung mittels Vernetzungsmechanismus A zwischen einem elastomeren Zustand und einem duroplastischen bzw. weniger stark ausgeprägten elastomeren Zustand schaltbar. Die Eigenschaften des weniger stark ausgeprägten elastomeren Zustands werden dabei durch den Vernetzungsgrad nach Mechanismus B bestimmt. Dieser ist für den Fachmann leicht wählbar und gezielt einstellbar, woraus sich ein weiterer Vorteil der vorliegenden Erfindung in Form einer breiten Varianzmöglichkeit ergibt.

Für den Fall, dass beide Vernetzungsmechanismen reversibel sind, kann zwischen einem duroplastischen, bzw. weniger elastomeren Zustand, einem elastomeren Zustand und einem thermoplastischen Zustand geschaltet werden.

In einer weiteren denkbaren, jedoch nicht erfindungsgemäßen Variante handelt es sich bei Mechanismus B nicht um einen Vernetzungsmechanismus, sondern um einen Mechanismus zur gezielten Steuerung der Viskosität, wie er in der deutschen Patentanmeldung DE 102010001992.5 offenbart ist. In diesem Fall weisen die Komponenten A und B jeweils nur eine oder zwei funktionelle Gruppen auf. In einem solchen System wird also zwischen einem - je nach Vernetzungsgrad gemäß Mechanismus A - duroplastischen bzw. elastomeren Zustand und zwei thermoplastischen Zuständen mit unterschiedlichen Schmelz- und Lösungsviskositäten geschaltet.
Entsprechend kann in einer weiteren, gleichfalls nicht erfinderischen Variante, in der auch Vernetzungsmechanismus A gemäß DE 102010001992.5 gestaltet ist, zwischen drei verschiedenen thermoplastischen Zuständen mit unterschiedlichen Viskositäten geschaltet werden. Eine solche Variante kann man darüber hinaus auch noch mit weiteren die Viskosität erhöhenden oder vernetzenden Mechanismen kombinieren.

In einer besonders schnellen Variante handelt es sich bei dem Dienophil um eine Verbindung mit einer Kohlenstoff-Schwefel-Doppelbindung und damit bei der bevorzugten Vernetzungsreaktion um eine Hetero-Diels-Alder-Reaktion. Besonders bevorzugt handelt es sich bei dem Dienophil um einen Dithioester. Ganz besonders bevorzugt ist das Dienophil eine Verbindung mit der Struktur 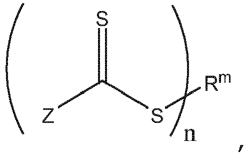 wobei es sich bei Z um eine stark Elektronen-ziehende Gruppe, bei R^{m} um eine mehrbindige organische Gruppe, bevorzugt basierend auf verzweigten oder linearen alkylischen, aromatischen oder einer Kombination aus alkylischen und aromatischen multifunktionalen Alkoholen, multifunktionalen halogenierten Verbindungen, multifunktionalen Carbonsäuren oder multifunktionalen Amine handelt. Alternativ kann es sich bei R^{m} auch um ein Polymer handeln. Die Anzahl der Dithioestergruppen n ist eine Zahl zwischen 2 und 20, bevorzugt zwischen 2 und 10 und besonders bevorzugt zwischen 2 und 4.
In einer bevorzugten Ausführungsform ist die Gruppe Z eine 2-Pyridylgruppe, eine Phosphorylgruppe oder eine Sulfphonylgruppe. Desweiteren kommen in Frage Cyano- oder Trifluoromethylgruppen sowie jede andere Gruppe Z, welche die Elektronendichte der C=S Doppelbindung sehr stark verringert und somit eine rasche Diels-Alder Reaktion erlaubt.

Diese Systeme können bereits bei Raumtemperatur, unter optionaler Zugabe eines Vernetzungskatalysators, sehr schnell vernetzen. Genauso überraschend wurde gefunden, dass diese Netzwerke bereits bei sehr geringen Temperaturen von z.B. etwas über 80 °C wieder einfach und nahezu vollständig in einen Thermoplasten zurückgeführt werden können. Darüber hinaus wurde sehr überraschend gefunden, dass daraufhin eine erneute Vernetzung, ohne weitere Zugabe von Vernetzer und/oder Katalysator, z.B. durch reines Abkühlen wieder erfolgen kann. Darüber hinaus ist es ein besonders überraschender Effekt, dass diese Zyklen aus Vernetzen und Rücküberführung in einen Thermoplasten mindestens dreimal, bevorzugt mindestens fünfmal ohne einen größeren Eigenschaftsverlust des Netzwerks durchgeführt werden können.

In einer möglichen Ausführungsform handelt es sich bei Komponente B um ein mittels Atom Transfer Radical Polymersation (ATRP) hergestelltes, bifunktionelles Polymer. In diesem Fall erfolgt die Funktionalisierung mit den Diengruppen durch eine polymeranalog oder während des Abbruchs durchgeführte Substitution endständiger Halogenatome. Diese Substitution kann beispielsweise durch Zugabe von mit Diengruppen funktionalisierten Mercaptanen erfolgen.

In der gleichen möglichen Ausführungsform kann als Komponente A eine niedermolekulare organische Verbindung mit 3 bis 4 Dithioestergruppen, entsprechend der oberen Ausführung eine die Elektronendichte der C=S Doppelbindung stark verringernden Gruppe Z aufweisend, verwendet werden.

Ein weiterer Aspekt der vorliegenden Erfindung ist das Verfahren zur doppelten Vernetzung, insbesondere zur reversiblen Vernetzung unter Vernetzungsmechanismus A. Bei der Durchführung dieses Verfahrens wird eine Formulierung aus zumindest zwei unterschiedlichen Komponenten A und B, mittels einer Diels-Alder- bzw. einer Hetero-Diels-Alder-Reaktion bevorzugt bei Raumtemperatur vernetzt. Insgesamt besteht das erfindungsgemäße Verfahren aus mindestens drei Verfahrensschritten:
Nach dem Mischen der Komponenten wird in einem ersten Vernetzungsschritt die erfindungsgemäße Zusammensetzung mittels oben beschriebenen Mechanismus B vernetzt. Dies kann bei der dazu geeigneten Temperatur, bei der es sich bevorzugt um Raumtemperatur handelt, erfolgen. Die Vernetzung kann auch von der Temperatur überwiegend unabhängig über einen radikalischen Mechanismus, z.B. durch Bestrahlung mit UV-Licht gestartet werden.

In einem zweiten Vernetzungsschritt mittels Mechanismus A, bei dem es sich um eine Diels-Alder- bzw. eine Hetero-Diels-Alder-Reaktion handelt, wird die gleiche Zusammensetzung zusätzlich bei Raumtemperatur vernetzt. Die beiden Vernetzungsschritte nach Mechanismus A und B können dabei simultan oder in beliebiger Reihenfolge zueinander erfolgen. Bevorzugt erfolgen beide Vernetzungsschritte simultan.
Bevorzugt erfolgt die Vernetzung mittels Mechanismus A nach dem Vermischen der Komponenten A und B innerhalb von 2 min. In einer gleichfalls bevorzugten Ausführungsform erfolgt die Vernetzung mittels Mechanismus A nach dem Vermischen der Komponenten A und B mit einem Vernetzungskatalysator innerhalb von 2 min.

In einem optionalen dritten Verfahrensschritt bei einer höheren Temperatur werden mindestens 50%, bevorzugt mindestens 90% und besonders bevorzugt mindestens 99% der Vernetzungsstellen, die gemäß Mechanismus A geknüpft wurden, mittels einer Retro-Diels-Alder- oder einer Retro-Hetero-Diels-Alder-Reaktion wieder gelöst. Bei Durchführung dieses dritten Verfahrensschritts werden bei einer Temperatur oberhalb von 80 °C bevorzugt innerhalb von 5 min, höchstens innerhalb von 10 min, mindestens 90 Gew%, bevorzugt mindestens 95 Gew% und besonders bevorzugt mindestens 98 Gew% der Vernetzungsstellen gemäß Mechanismus A wieder gelöst.

In einer bereits dargelegten Variante der Erfindung handelt es sich auch bei der Vernetzung mittels Mechanismus B auch um eine reversible Vernetzung mittels einer Diels-Alder- oder einer Hetero-Diels-Alder-Reaktion. In diesem Fall kann diese Vernetzung bei einer Temperatur, die mindestens 40 °C oberhalb der Lösungstemperatur der Vernetzung nach Mechanismus A liegt, mittels einer Retro-Diels-Alder- oder einer Retro-Hetero-Diels-Alder-Reaktion wieder gelöst werden.
Bevorzugt werden bei Durchführung dieser Variante bei einer Temperatur oberhalb von 140 °C bevorzugt innerhalb von 5 min mindestens 90 % der Formulierung in einem für die Formulierung vor der Vernetzung geeigneten Lösungsmittel wieder löslich.

Der Ausdruck Formulierung beschreibt im Rahmen dieser Schrift ausschließlich die Komponenten A, B, C und die optionale Komponente D sowie einen optionalen Vernetzungskatalysator. Der Ausdruck Zusammensetzung dagegen umfasst neben der Formulierung zusätzlich zugegebene Komponenten. Weitere Zusammensetzungsbestandteile, wie sie zum Beispiel in einer Beschichtungs- oder Klebstoffzusammensetzung zugegeben werden können, sind in dem Begriff Formulierung nicht berücksichtigt. Bei diesen zusätzlichen Komponenten kann es sich um spezifisch für die jeweilige Anwendung ausgesuchte Zuschlagsstoffe wie beispielsweise Füllstoffe, Pigmente, Additive, Verträglichkeitsvermittler, Cobindemittel, Weichmacher, Schlagzähmodifier, Verdicker, Entschäumer, Dispergieradditive, Rheologieverbesserer, Haftvermittler, Kratzfestadditive, Katalysatoren oder Stabilisatoren handeln.

Entsprechend der bereits beschriebenen Formulierung werden in dem Verfahren zuerst die Komponenten A, B, C und optional D, sowie optionale weitere Zuschlagsstoffe zusammen gebracht. Bei den Komponenten A und/oder B und/oder C bzw. D handelt es sich um zumindest ein Polymer gemäß der weiter oben aufgeführten Auflistung.

Die reversible Vernetzungsreaktion A kann bei Raumtemperatur innerhalb von 10 min, bevorzugt innerhalb von 5 min, besonders bevorzugt innerhalb von 2 min und ganz besonders bevorzugt innerhalb von einer Minute erfolgen. Zur Beschleunigung der Vernetzung kann nach dem Vermischen der Komponenten A und B ein Vernetzungskatalysator zugegeben werden. Bei diesen Vernetzungskatalysatoren handelt es sich in der Regel um starke Säuren wie Trifluoressigsäure oder Schwefelsäure oder um starke LewisSäuren wie z.B. Bortrifluorid, Zinkdichlorid, Titandichlorid-diisopropylat oder Aluminiumtrichlorid.

In einer alternativen Ausführungsform kann die reversible Vernetzung auch ohne einen Katalysator, z.B. thermisch, beschleunigt werden. Dabei liegt die Aktivierungstemperatur unterhalb der Temperatur, die für die Retro-(Hetero)-Diels-Alder-Reaktion benötigt wird.

In einer weiteren alternativen Ausführungsform enthält die Formulierung unabhängig von der Aktivierung der reversiblen Vernetzungsreaktion einen weiteren Katalysator, der die Aktivierungstemperatur der Retro-Diels-Alder- bzw. der Retro-Hetero-Diels-Alder-Reaktion absenkt. Bei diesen Katalysatoren kann es sich beispielsweise um Eisen oder eine Eisenverbindung handeln.

Die erfindungsgemäßen Formulierungen bzw. Verfahren können in verschiedensten Anwendungsgebieten zur Verwendung kommen. Die nachfolgende Liste zeigt einige bevorzugte Anwendungsgebiete beispielhaft auf, ohne die Erfindung diesbezüglich in irgendeiner Form einzuschränken. Solche bevorzugten Anwendungsgebiete sind Membranen, Klebstoffe, Dichtstoffe, Formmassen, Lacke, Farbe, Beschichtungen, Verbundmaterialien oder Tinten.

Ein Beispiel für Anwendungen im Bereich Rapid-Prototyping für die hier beschriebenen vernetzenden und entnetzenden Materialien sind, im Bereich FDM (Fused Deposition Modeling) oder beim 3D-Druck per Ink-jet-Verfahren mit niedrigviskosen Schmelzen zu finden.

Beispiele zur Funktionsweise und zur Durchführung des reversiblen Vernetzungsmechanismus A, bzw. in der alternativen Ausführungsform B können in den Patentanmeldungen DE 102010001987.9, DE 102010001992.5 und DE 102010040282.6 nachgelesen werden.

### Beispiele

### Vorstufe 1 Synthese von Br-funktionalem Poly(nBA-co-iBoA)

a) 20 Äquivalente n-Butylacrylat (nBA), 20 Äquivalente Isobornylacrylat (iBoA), 1 Äquivalent 1,4-Bis(bromoisobutyryloxy)butan, 0,105 Äquivalente Kupfer(I)bromid, 0,0125 Äquivalente Kupfer(II)bromid und 0,25 Äquivalente 2,2'-Bipyridin werden in einem 1L-Dreihalkskolben mit Magnetrührer, Stickstoffzuleitung und Rückflusskühler vorgelegt. Es wird soviel Aceton zu der Mischung hinzugefügt, dass 500 mL einer 50 Vol%igen Lösung vorliegen. Vorhandener Sauerstoff wird durch 40 minütiges Durchleiten von Stickstoff entfernt. Die Mischung wird darauf unter Stickstoff in einem Ölbad auf 60 °C erhitzt. Nach 3 h Polymerisation wird diese durch Abkühlen auf Raumtemperatur und Zuleiten von Luftsauerstoff abgebrochen. Der Kupferkartalysator wird durch elektrochemische Abscheidung auf Zinkstaub entfernt. Das Brom-terminierte Poly(n-butylacrylat) wird durch Verdampfen des Lösemittels gewonnen. Das Molekulargewicht wird mittels GPC mit Kalibration gegen PMMA-Standarts in THF bestimmt: *M*ₙ = 4300 g-mol⁻¹, PDI = 1.2.

### Vorstufe 2 Synthese von Cp-funktionalem Poly(nBA-co-iBoA)

1 Äquivalent Polymer aus der Vorstufe 1, 6 Äquivalente Natriumjodid, 2 Äquivalente Triphenylphosphin und 2 Äquivalente Nickelocen werden in einem 50 mL-Dreihalskolben mit Magnetrührer, Rückflusskühler und Tropftrichter unter Stickstoff in Aceton gerührt. Dabei werden 25 mL einer bezogen auf das Polymer 0,1-molaren Lösung gebildet. Die Lösung wird 12 h bei Raumtemperatur gerührt, die Reaktionslösung wird anschließend säulenchromatographisch über eine kurze, mit basischem Aluminiumoxid gefüllte Säule gereinigt. Das Cyclopentadienyl-terminierte Polymer wird zweimal in kaltem Ethanol durch Zugabe von Wasser gefällt. Die Umsetzung der Br-Endgruppen zu Cp-Endgruppen kann per Kernresonanzspektroskopie nachgewiesen werden. Durch Kernresonanzsprektroskopie konnten 3,2 mol% Cp-Gruppen im Copolymeren nachgewiesen werden.

### Vorstufe 3 Synthese von Poly(BuMA-co MMA -co- HEMA-Maleinat)

Zur Synthese des Copolymers wird in einem Glasbehälter ein Gemisch aus 56 Gewichtsteilen n-Butylmethacrylat, 24 Teilen Methylmethacrylat und 20 Gewichtsteilen HEMA-Maleinat (Hydroxyethylmethacrylat-Maleinat) in 35 Gewichtsteilen Xylol gelöst, mit 4 Gewichtsteilen Mercaptoethanol versetzt und mittels Durchleiten von Stickstoff entgast. In einem weiteren Behälter wird eine 10 Gew%ige Lösung von α,α'-Azobis-(isobuttersäure-2-hydroxyethylamid (3 Gewichtsteile) hergestellt. Die beiden Vorlagen werden in konstantem Verhältnis über einen Zeitraum von fünf Stunden in einen auf 110°C temperierten Glasdoppelmantelreaktor mit Thermostat unter Stickstoff zudosiert und polymerisieren gelassen. Nach Ablauf der Dosierung wird für eine weitere Stunde bei 110°C nachgeheizt und die entstandene Polymerlösung abgekühlt und ausgetragen. Es wird eine zähviskose klare Polymerlösung erhalten. Das Molekulargewicht wird mittels GPC mit Kalibration gegen PMMA-Standarts in THF, versetzt mit 1 Gew% TFA bestimmt: *M*ₙ = 5400 g·mol⁻¹, *PDI* = 2.6. Durch Kernresonanzsprektroskopie konnten 3,7 mol% HEMA-Maleinat im Copolymeren nachgewiesen werden.

### Beispiel 1

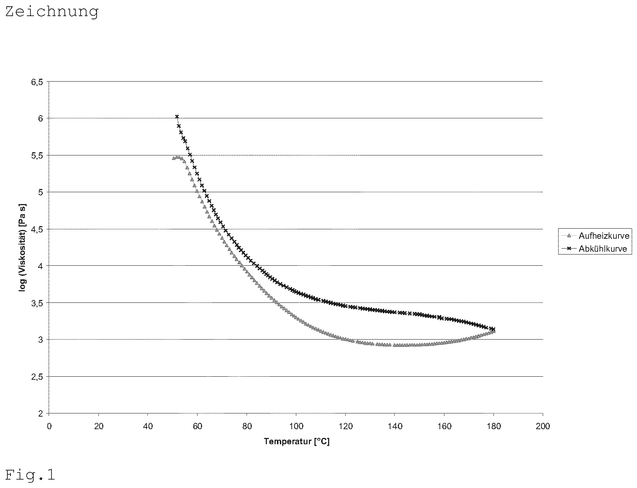

20 Gewichtsteile der Vorstufe 2 werden mit 15 Gewichtsteilen Vorstufe 3 (0,75 Äquivalente zu Cp-Gruppen), 50 Gewichtsteilen Aceton und einem Gewichtsteil ZnCl₂ versetzt und für 2 Stunden bei Raumtemperatur gerührt. Danach wird die Probe in eine Aluminiumschale gegossen und im Vakuumschrank bei 50°C getrocknet (über Nacht). Die zähelastische Masse wurde zur dynamisch-mechanischen Analyse gegeben und über einen Temperaturbereich zwischen 50 und 180°C mittels Platte-Platte Viskosität Charakterisiert (siehe Fig.1). Die DSC ergab eine Glastemperatur der Masse von -6°C.

Zu erkennen ist dass das Material einen Erweichungspunkt bei ca. 55°C hat, an dem der Teil der Diels-Alder Verbrückungen aufbricht, die zwischen Cp-Gruppen und Maleinsäureester entstanden sind. Die Cp-Cp-Verbindungen die aus dem Überschuss der Cp-Gruppen stammen und unter den Messbedinugngen nicht reversibel sind, bleiben als Vernetzer erhalten. Bei dieser nicht reversiblen Vernetzung handelt es sich somit um einen zweiten Diels-Alder-Mechanismus.

## Patentansprüche

1. Teilweise reversibel vernetzbare Formulierung, **dadurch gekennzeichnet, dass** die Formulierung mittels zweier unterschiedlicher Mechanismen A und B vernetzbar ist, dass es sich bei Mechanismus A um eine Diels-Alder- oder eine Hetero-Diels-Alder-Reaktion handelt,
dass Mechanismus A bei Raumtemperatur aktivierbar ist und die Vernetzung bei einer höheren Temperatur zu mindestens 50% wieder rückgängig gemacht werden kann, und dass Mechanismus B diese Kombination von Bedingungen nicht erfüllt.

2. Formulierung gemäß Anspruch 1, **dadurch gekennzeichnet, dass** es sich bei Mechanismus B um eine ester-, amid-, epoxy-, silyl- oder isocyanat-basierte Vernetzung handelt.

3. Formulierung gemäß Anspruch 1, **dadurch gekennzeichnet, dass** es sich bei Mechanismus B um eine UV-, thermisch oder Initiator-initiierte radikalische Vernetzung oder Vulkanisation handelt.

4. Formulierung gemäß Anspruch 1, **dadurch gekennzeichnet, dass** es sich bei Mechanismus B um eine physikalische Vernetzung handelt.

5. Formulierung gemäß Anspruch 1, **dadurch gekennzeichnet, dass** es sich bei Mechanismus B auch um eine reversibel schaltbare Diels-Alder- oder Hetero-Diels-Alder-Reaktion handelt, und dass die Vernetzungstemperatur und/oder die Deaktivierungstemperatur um mindestens 40 °C höher ist als bei Mechanismus A.

6. Formulierung gemäß Anspruch 1, **dadurch gekennzeichnet, dass** die Formulierung eine Komponente A enthält, die mindestens zwei dienophile Doppelbindungen aufweist, dass die Formulierung eine Komponente B enthält, die mindestens zwei Dien-Funktionalitäten aufweist,
dass die Formulierung eine Komponente C und eine optionale Komponente D enthält, die zur Vernetzung gemäß Mechanismus B aktivierbar sind,
dass zumindest eine dieser beiden Komponenten A oder B mehr als zwei Funktionalitäten aufweist,
und dass mindestens eine der Komponenten A oder B als Polymer vorliegt.

7. Formulierung gemäß Anspruch 6, **dadurch gekennzeichnet, dass** es sich bei den Komponenten A und B jeweils um ein Polymer handelt, und dass es sich bei diesen Polymeren um gleiche oder verschiedene Polymere handeln kann.

8. Formulierung gemäß Anspruch 6 oder 7, **dadurch gekennzeichnet, dass** die Komponente C und/oder die optionale Komponente D identisch ist/sind mit der Komponente A und/oder B, und dass diese identische Komponente oder Komponenten entsprechend jeweils Funktionalitäten für den Vernetzungsmechanismus A und B aufweisen.

9. Formulierung gemäß mindestens einem der Ansprüche 6 bis 8, **dadurch gekennzeichnet, dass** es sich bei den Polymeren um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handelt.

10. Verfahren zur teilweise reversiblen Vernetzung, **dadurch gekennzeichnet, dass** eine Formulierung aus zumindest drei unterschiedlichen Komponenten A, B, C und optional D,
in einem ersten Vernetzungsschritt unter Reaktion von Komponente C und optional Komponente D mittels eines Mechanismus B vernetzt wird,
in einem zweiten Vernetzungsschritt mittels eines Mechanismus A unter Reaktion von Komponenten A und B, bei dem es sich um eine Diels-Alder- bzw. eine Hetero-Diels-Alder-Reaktion handelt, bei Raumtemperatur vernetzt wird, wobei beide Vernetzungsschritte simultan oder in beliebiger Reihenfolge zueinander erfolgen können, und
in einem optionalen dritten Verfahrensschritt bei einer höheren Temperatur mindestens 50% der Vernetzungsstellen mittels einer Retro-Diels-Alder- oder einer Retro-Hetero-Diels-Alder-Reaktion wieder gelöst werden.

11. Verfahren gemäß Anspruch 10, **dadurch gekennzeichnet, dass** die beiden Vernetzungsschritte simultan erfolgen.

12. Verfahren gemäß Anspruch 10, **dadurch gekennzeichnet, dass** es sich bei der Vernetzung mittels Mechanismus B auch um eine reversible Vernetzung mittels einer Diels-Alder- oder einer Hetero-Diels-Alder-Reaktion handelt, und dass diese Vernetzung bei einer Temperatur, die mindestens 40 °C oberhalb der Lösungstemperatur der Vernetzung nach Mechanismus A mittels einer Retro-Diels-Alder- oder einer Retro-Hetero-Diels-Alder-Reaktion wieder gelöst werden können.

13. Verfahren gemäß Anspruch 12, **dadurch gekennzeichnet, dass** bei einer Temperatur oberhalb von 140 °C bevorzugt innerhalb von 5 min mindestens 90 % der Formulierung in einem für die Formulierung vor der Vernetzung geeigneten Lösungsmittel wieder löslich sind.

14. Verfahren gemäß zumindest einem der Ansprüche 10 bis 13, **dadurch gekennzeichnet, dass** es sich bei den Komponenten A und/oder B um Polymere gemäß Anspruch 9 handelt.

15. Verfahren gemäß zumindest einem der Ansprüche 10 bis 14, **dadurch gekennzeichnet, dass** die Vernetzung mittels Mechanismus A nach dem Vermischen der Komponenten A und B innerhalb von 2 min erfolgt.

16. Verfahren gemäß zumindest einem der Ansprüche 10 bis 14, **dadurch gekennzeichnet, dass** die Vernetzung mittels Mechanismus A nach dem Vermischen der Komponenten A und B mit einem Vernetzungskatalysator innerhalb von 2 min erfolgt.

17. Verwendung einer Formulierung gemäß zumindest einem der Ansprüche 1 bis 9 in Membranen, Klebstoffen, Dichtstoffen, Formmassen, Lacken, Farben, Beschichtungen, Tinten oder Verbundmaterialien.

## Claims

1. Partially reversibly crosslinkable formulation **characterized in that** the formulation is crosslinkable by means of two different mechanisms A and B,
**in that** mechanism A is a Diels-Alder or hetero-Diels-Alder reaction,
**in that** mechanism A can be activated at room temperature and the crosslinking can be reversed at a higher temperature to an extent of at least 50%, and **in that** mechanism B does not meet this combination of conditions.

2. Formulation according to Claim 1, **characterized in that** mechanism B is an ester-, amide-, epoxy-, silyl- or isocyanate-based crosslinking.

3. Formulation according to Claim 1, **characterized in that** mechanism B is a UV-initiated, thermally initiated or initiator-initiated radical crosslinking or vulcanization.

4. Formulation according to Claim 1, **characterized in that** mechanism B is a physical crosslinking.

5. Formulation according to Claim 1, **characterized in that** mechanism B is also a reversibly switchable Diels-Alder or hetero-Diels-Alder reaction, and **in that** the crosslinking temperature and/or the deactivation temperature is higher by at least 40°C than for mechanism A.

6. Formulation according to Claim 1, **characterized in that** the formulation comprises a component A which has at least two dienophilic double bonds,
**in that** the formulation comprises a component B which has at least two diene functionalities,
**in that** the formulation comprises a component C and an optional component D which can be activated for crosslinking according to mechanism B,
**in that** at least one of these two components, A or B, has more than two functionalities,
and **in that** at least one of the components, A or B, is present in the form of a polymer.

7. Formulation according to Claim 6, **characterized in that** components A and B are each a polymer, and **in that** these polymers may be identical or different polymers.

8. Formulation according to Claim 6 or 7, **characterized in that** component C and/or optional component D are/is identical to component A and/or B, and **in that** this or these identical component or components correspondingly each has functionalities for the crosslinking mechanism A and B.

9. Formulation according to at least one of Claims 6 to 8, **characterized in that** the polymers are polyacrylates, polymethacrylates, polystyrenes, copolymers of acrylates, methacrylates and/or styrenes, polyacrylonitrile, polyethers, polyesters, polylactic acids, polyamides, polyester amides, polyurethanes, polycarbonates, amorphous or partially crystalline poly-α-olefins, EPDM, EPM, hydrogenated or unhydrogenated polybutadienes, ABS, SBR, polysiloxanes and/or block, comb and/or star copolymers of these polymers.

10. Process for partially reversible crosslinking, **characterized in that** a formulation comprising at least three different components A, B, C and optionally D
in a first crosslinking step is crosslinked with reaction of component C and optionally component D by means of a mechanism B,
in a second crosslinking step is crosslinked at room temperature by means of a mechanism A, with the reaction of components A and B, this being a Diels-Alder or hetero-Diels-Alder reaction, it being possible for both crosslinking steps to take place simultaneously or in any desired order relative to one another, and
in an optional third process step, at a higher temperature, at least 50% of the crosslinks are undone by means of a retro-Diels-Alder reaction or retro-hetero-Diels-Alder reaction.

11. Process according to Claim 10, **characterized in that** the two crosslinking steps take place simultaneously.

12. Process according to Claim 10, **characterized in that** the crosslinking by means of mechanism B is also a reversible crosslinking by means of a Diels-Alder or hetero-Diels-Alder reaction, and **in that** this crosslinking can be undone at a temperature which is at least 40°C above the undo temperature of the crosslinking by mechanism A, by means of a retro-Diels-Alder or retro-hetero-Diels-Alder reaction.

13. Process according to Claim 12, **characterized in that** at a temperature above 140°C, preferably within 5 minutes, at least 90% of the formulation is soluble again in a solvent suitable for the formulation prior to crosslinking.

14. Process according to at least one of Claims 10 to 13, **characterized in that** components A and/or B are polymers according to Claim 9.

15. Process according to at least one of Claims 10 to 14, **characterized in that** the crosslinking by means of mechanism A takes place after the mixing of components A and B within 2 minutes.

16. Process according to at least one of Claims 10 to 14, **characterized in that** the crosslinking by means of mechanism A takes place after the mixing of components A and B with a crosslinking catalyst within 2 minutes.

17. Use of a formulation according to at least one of Claims 1 to 9 in membranes, adhesives, sealants, moulding compounds, varnishes, paints, coatings, inks or composite materials.

## Revendications

1. Formulation réticulable de manière partiellement réversible, **caractérisée en ce que** la formulation peut être réticulée au moyen de deux mécanismes A et B différents, **en ce que** le mécanisme A est une réaction de Diels-Alder ou hétéro-Diels-Alder, **en ce que** le mécanisme A est activable à température ambiante et la réticulation peut être à nouveau annulée à raison d'au moins 50% à une température plus élevée et **en ce que** le mécanisme B ne remplit pas cette combinaison de conditions.

2. Formulation selon la revendication 1, **caractérisée en ce qu'**il s'agit, pour le mécanisme B, d'une réticulation à base d'un ester, d'un amide, d'époxy, de silyle ou d'isocyanate.

3. Formulation selon la revendication 1, **caractérisée en ce qu'**il s'agit, pour le mécanisme B, d'une réticulation ou d'une vulcanisation radicalaire initiée par des UV, de manière thermique ou par un initiateur.

4. Formulation selon la revendication 1, **caractérisée en ce qu'**il s'agit, pour le mécanisme B, d'une réticulation physique.

5. Formulation selon la revendication 1, **caractérisée en ce qu'**il s'agit, pour le mécanisme B, également d'une réaction de Diels-Alder ou hétéro-Diels-Alder réversible et **en ce que** la température de réticulation et/ou la température de désactivation est supérieure d'au moins 40°C à celle lors du mécanisme A.

6. Formulation selon la revendication 1, **caractérisée en ce que** la formulation contient un composant A qui présente au moins deux doubles liaisons diénophiles, **en ce que** la formulation contient un composant B, qui présente au moins deux fonctionnalités diène, **en ce que** la formulation contient un composant C et un composant D facultatif, qui sont activables pour la réticulation selon le mécanisme B, **en ce qu'**au moins un de ces deux composants A ou B présente plus de deux fonctionnalités, et **en ce qu'**au moins un des composants A ou B se trouve sous forme de polymère.

7. Formulation selon la revendication 6, **caractérisée en ce qu'**il s'agit, pour les composants A et B, à chaque fois d'un polymère et **en ce qu'**il peut s'agir de polymères identiques ou différents pour ces polymères.

8. Formulation selon la revendication 6 ou 7, **caractérisée en ce que** le composant C et/ou le composant D facultatif est/sont identique(s) au(x) composant(s) A et/ou B et **en ce que** ce composant ou ces composants identique(s) présente(nt) de manière correspondante à chaque fois des fonctionnalités pour le mécanisme de réticulation A et B.

9. Formulation selon l'une quelconque des revendications 6 à 8, **caractérisée en ce qu'**il s'agit, pour les polymères, de polyacrylates, de polyméthacrylates, de polystyrènes, de copolymères d'acrylates, de méthacrylates et/ou de styrènes, de polyacrylonitrile, de polyéthers, de polyesters, de poly(acides lactiques), de polyamides, de polyesteramides, de polyuréthanes, de polycarbonates, de poly-α-oléfines amorphes ou partiellement cristallines, d'EPDM, d'EPM, de polybutadiènes hydrogénés ou non hydrogénés, d'ABS, de SBR, de polysiloxanes et/ou de copolymères séquencés, en peigne et/ou en étoile de ces polymères.

10. Procédé pour la réticulation partiellement réversible, **caractérisé en ce qu'**une formulation constituée par au moins trois composants A, B, C différents et, facultativement, un composant D, est réticulée dans une première étape de réticulation avec réaction du composant C et du composant facultatif D au moyen d'un mécanisme B, dans une deuxième étape de réticulation au moyen d'un mécanisme A avec réticulation des composants A et B, où il s'agit d'une réaction de Diels-Alder ou hétéro-Diels-Alder, à température ambiante, les deux étapes de réticulation pouvant se dérouler simultanément ou également dans un ordre quelconque et, dans une troisième étape de procédé facultative, à une température plus élevée, au moins 50% des sites de réticulation sont de nouveaux défaits au moyen d'une réaction rétro-Diels-Alder ou rétro-hétéro-Diels-Alder.

11. Procédé selon la revendication 10, **caractérisé en ce que** les deux étapes de réticulation se déroulent simultanément.

12. Procédé selon la revendication 10, **caractérisé en ce qu'**il s'agit, pour la réticulation au moyen du mécanisme B, également d'une réticulation réversible au moyen d'une réaction de Diels-Alder ou hétéro-Diels-Alder et **en ce que** cette réticulation peut également de nouveau être défaite, à une température qui est supérieure d'au moins 40°C à la température à laquelle la réticulation selon le mécanisme A est défaite, au moyen d'une réaction rétro-Diels-Alder ou rétro-hétéro-Diels-Alder.

13. Procédé selon la revendication 12, **caractérisé en ce qu'**à une température supérieure à 140°C, de préférence en 5 minutes, au moins 90% de la formulation sont de nouveau solubles dans un solvant approprié pour la formulation avant la réticulation.

14. Procédé selon au moins l'une quelconque des revendications 10 à 13, **caractérisé en ce qu'**il s'agit, pour les composants A et/ou B, de polymères selon la revendication 9.

15. Procédé selon au moins l'une quelconque des revendications 10 à 14, **caractérisé en ce que** la réticulation au moyen du mécanisme A a lieu dans les 2 min après le mélange des composants A et B.

16. Procédé selon au moins l'une quelconque des revendications 10 à 14, **caractérisé en ce que** la réticulation au moyen du mécanisme A a lieu dans les 2 min après le mélange des composants A et B avec un catalyseur de réticulation.

17. Utilisation d'une formulation selon au moins l'une quelconque des revendications 1 à 9 dans des membranes, des adhésifs, des substances d'étanchéité, des masses de moulage, des laques, des peintures, des revêtements, des encres ou des matériaux composites.
